Europäisches Patentamt

European Patent Office

Office européen des brevets

(19)

(11) EP 0 682 833 B1

(12) EUROPEAN PATENT SPECIFICATION

(45) Date of publication and mention
of the grant of the patent:
**01.10.1997 Bulletin 1997/40**

(21) Application number: **94907949.5**

(22) Date of filing: **02.02.1994**

(51) Int Cl.6: **H04L 12/56**

(86) International application number:
**PCT/US94/01171**

(87) International publication number:
**WO 94/18771 (18.08.1994 Gazette 1994/19)**

(54) **FLOW CONTROL BY EVALUATING NETWORK LOAD**

DATENFLU STEUERUNG DURCH LASTBEWERTUNG DES NETZES

REGULATION DU FLUX DE DONNEES SUR LA BASE DE L'EVALUATION DE LA CHARGE DU RESEAU

(84) Designated Contracting States:
**AT BE CH DE DK ES FR GB GR IE IT LI LU MC NL PT SE**

(30) Priority: **03.02.1993 US 13009**
**08.12.1993 US 164407**

(43) Date of publication of application:
**22.11.1995 Bulletin 1995/47**

(73) Proprietor: **NOVELL, INC.**
**Orem, UT 84057-2399 (US)**

(72) Inventors:
• **KERR, Paul, R.**
**Westminster, MA 01473 (US)**
• **TAVAKOLI, Oliver, K.**
**Sudbury, MA 01473 (US)**
• **NELSON, Blake, E.**
**Lexington, MA 02173 (US)**
• **UPPALURU, Premkumar**
**North Andover, MA 01845 (US)**
• **KLEIMAN, Jeffrey, L.**
**Lexington, MA 02173 (US)**

(74) Representative: **Hanna, Peter William Derek**
**Tomkins & Co.,**
**5 Dartmouth Road**
**Dublin 6 (IE)**

(56) References cited:
**EP-A- 0 425 202**

• **PHOENIX CONFERENCE ON COMPUTERS AND COMMUNICATIONS, April 1992, NEW YORK, US pages 315 - 322 Z. WANG ET AL. 'A FLUID MODEL APROXIMATION TO QUANTITATIVE INFORMATION FEEDBACK IN CONGESTION CONTROL'**
• **VISUAL COMMUNICATIONS AND IMAGE PROCESSING, vol.2, November 1991, USA pages 592 - 603 M. GILGE ET AL. 'Motion Video Coding for Packet-Switching Networks - An Integrated Approach'**
• **16TH CONFERENCE ON LOCAL COMPUTER NETWORKS, October 1991, LOS ALAMITOS, US pages 599 - 610 G. BRONER ET AL. 'Experiences with IFS : a distributed Image Filing System'**

## Description

Distributed computer systems, and the networking infrastructure they utilize, have made substantial advances in recent years. However the overall throughput of these systems is currently optimized for transfer and processing data having low bandwidth requirements and no time dependency. When applications attempt to utilize existing infrastructures to deliver and display data requiring sustained high data rate throughput with time dependency, such as digitized video and audio, the infrastructure is often unable to meet the application's requirements in a sustained manner. In particular, when applications running on multitasking desktop systems attempt to access time critical data from local or wide area networks and display the data at the desktop system, the presentation of the data is often critically impaired because of the system limitations.

Distributed systems may be limited in the ability to deliver the data in the proper sequence and by the time required, or they may be limited in the ability to process and present the data, once received, by the time required.

Data Delivery

Applications accessing and/or displaying time critical, high data rate, sequenced data greatly tax the performance of common existing networks. Since the data is time critical it becomes useless to the application if it arrives late. The high data rate may exceed the available bandwidth of the network preventing all data from being delivered by the required time. Due to the sequenced and temporal dependence nature of the data, even if stale, it must be delivered to the application for proper processing.

The delivery network is usually a resource shared among multiple users. As such, any one user may be limited to a bandwidth substantially less than the network can provide. Furthermore, the bandwidth available to any one user can fluctuate greatly from one time quantum to another. This will occur as other applications and other nodes make heavier or lighter use of the shared resource. The limitations and fluctuations prevent delivering all data to its destination, by the required time, in a sustained manner.

No existing systems address delivery limitations. Existing solutions avoid the problem by (1) requiring specialized delivery hardware, (2) limiting solutions to non distributed environments, or (3) allowing the presentation of data to degrade in a chaotic manner.

US-A-4,771,391 (Blasbalg) discloses a data delivery system for a network in which the packet length for transmitted data is adjusted according to the data flow rate in the network. Heavy loading of a network produces delays as the various nodes contend for control of the network to transmit signals. A data source in the system disclosed in the Blasbalg reference maintains network stability by monitoring the flow rate of information on the network and accordingly adjusting the packet length for data transmitted onto the network. Thus, the Blasbalg system is designed to maximize throughput with minimal delay time.

Although the packet length is adjusted in the Blasbalg system, it should be noted that all of the data waiting to be transmitted onto the network is eventually transmitted. The data is transmitted regardless of its type. Only the packet length varies.

In addition, it should be noted that source node in the Blasbalg system performs the monitoring of the network characteristics (i.e. the information flow rate) and adjusts the packet length accordingly. The resources available at the receiving node are not monitored, and do not affect the performance of the Blasbalg sytem.

## Summary of the Invention

The present invention, is defined in claim 1, and provides a data delivery system referred to as adaptive rate scaling, and uses techniques to evaluate available delivery resources, to adjust data flow to available delivery resources and to adjust data flow to available bandwidth in a non random manner. By monitoring the delivery rate trends and fluctuations the invention is able to semantically enhance the data, reduce the data needing delivery - in a non-random manner- to within available limits, and adjust the distributed delivery software mechanism to best utilize available resources.

In general, in one aspect, the invention features a system for varying the volume of data delivered on a communication medium The invention consists of a data consumer and a data producer which communicate through a data communications medium. The data consumer measures the utilization of the data communications medium and the utilization of the data consumer and generates a scaling parameter representing the loading of the system The data consumer communicates the scaling parameter to the data producer through the data communications medium. The data producer then adjusts the volume of data transmitted through the communications medium according to the scaling parameter.

In preferred embodiments, the specified data producer is a fileserver and the data consumer is a workstation. The data communications medium is a computer network.

In other preferred embodiments the data producer and data consumer are a single computer system.

In other preferred embodiments the data consumer is further adapted to receive transmitted data and temporarily store the data in a buffer. The data consumer modifies the buffer size according to the specified scaling parameter.

In other preferred embodiments, the data producer produces two types of data. The first data is delivered at a fixed volume and the second data is delivered at a variable volume. The data producer varies the volume of the second data according to the specified scaling parameter received from the data consumer.

In other preferred embodiments, the first data is audio data and the second data is video data. The volume of video data delivered by the data producer varies according to the scaling parameter received from the data consumer.

In other preferred embodiments, the data producer produces more than two types of data. The data producer delivers each data type at a volume specified individually for each data type. The data producer individually varies the volume of each data type according to the specified scaling parameter received from the data consumer.

In other preferred embodiments, multiple streams (instances) of each data type are communicated by the data producer through the communications medium to the data consumer.

Further aspects, features, and advantages of the invention are set forth in the following specification and the claims.

## Brief Description of the Drawing

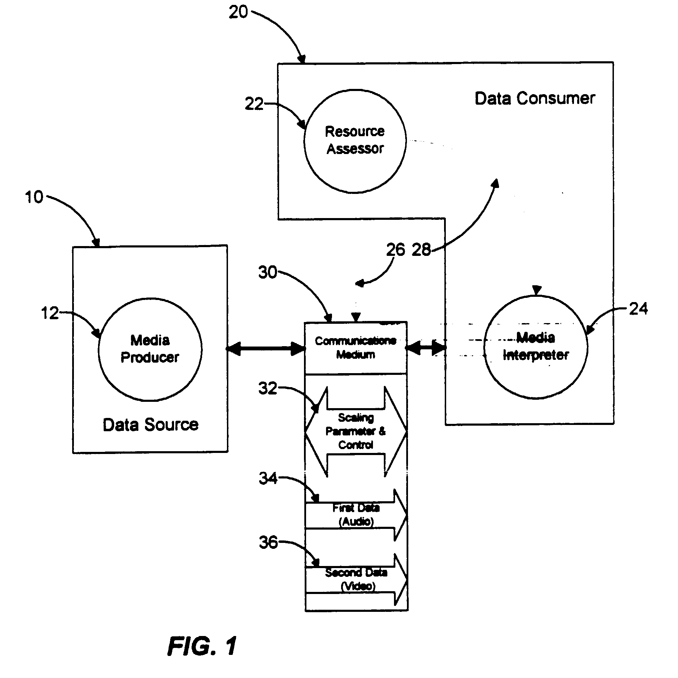

Fig. 1 is a schematic diagram of the architecture of the present invention.

## Description of a Preferred Embodiment

### Data Processing/Presentation

In multitasking workstations, the components of the system are shared resources. Multiple applications or tasks may be vying for the same CPU, bus, video subsystem, audio subsystem, etc. The available resources of any subsystem may be insufficient to fulfill its responsibilities. For example, if a workstation is unable to process and display video data as efficiently as audio data, it is possible to experience a loss of synchronization.

Existing applications either ignore these situations or attempt to address them by sensing that one or more subsystems has fallen critically behind and trying to catch up by rushing the subsystem. This approach may result in random dropping of data that has become stale.

The present invention, referred to as adaptive rate scaling, uses techniques to evaluate processing and display resources and adjust data flow to available bandwidth in a non random manner. The invention determines what resources will most likely be available for processing and display of data. Only data that can be processed and presented in a timely manner is delivered to the workstation. The application need not deal with stale data. By monitoring the delivery and processing rate trends and fluctuations the adaptive rate scaling process of the invention is able to determine available resources, semantically enhance the data, reduce the data needing process and display - in a non-random manner - to be within available limits, and adjust the distributed delivery software process to best utilize available resources.

### Audio Video Synchronization

Digitized audio and video are dynamic data types with temporal presentation attributes (either implicit or explicit). Furthermore, the presentation of audio and video is tightly coupled for synchronization. Digital video and audio data streams have real-time constraints with respect to their presentation. The streams are usually continuous ranging from 30 second clips through 2 hour movies to continuous live feeds. They also consume from 1Mbit/sec to 4M bits/sec in storage capacity and/or transmission bandwidth depending on the compression technology.

Synchronized presentation of digital audio and video is often achieved by interleaving audio and video in the storage container or during the injection process of live data. A unit of video (say a frame) is associated with a unit of audio (the corresponding 33 ms clip) physically in storage. The presentation system retrieves chunks of interleaved audio/video data at an aggregate rate matching the presentation rate and handing these chunks of interleaved audio/video data at an aggregate rate matching the presentation rate and hands these chunks to the presentation/decoder subsystem either in an interleaved or deinterleaved fashion. Synchronization between audio and video is achieved by the initial interleaving in the storage and presenting the information at the nominal presentation rate. Synchronization is achieved by alternately handing the audio and video units to the digital video and digital audio subsystems in a round robin fashion.

The interleaving can be of a fine interleaving (a single video presentation unit and a sufficient number of audio samples to fill a corresponding presentation duration in a repeating manner) or a more coarse interleaving (more than one video presentation unit then the sufficient number of audio samples to fill a corresponding presentation duration in a repeating manner). The interleaving can become sufficiently coarse as to consist of all video presentation units in sequence followed by all audio chunks of corresponding duration (or the structure may be all audio chunks followed by all video chunks). Depending on the granularity of the interleaving an application responsible for display of the dynamic data may choose to open the dynamic data source once or multiple times for efficient retrieval and display.

If the dynamic data is finely interleaved (e.g. one video presentation chunk to one corresponding chunk of audio data of equal temporal duration) the display application will commonly open the data source once obtaining the video and audio data in the interleaved fashion and separate the video and audio data to the appropriate display systems (video or audio) at the appropriate presentation time.

If the dynamic data is more coarsely interleaved the spacing between two chunks of a given stream type may be greater than the duration of the data contained within a given chunk of stream. In other words, when working with coarsely interleaved video and audio data, pulling consecutive chunks of video data through the system and processing it, may take longer than the sum of the presentation times of the audio chunk interleaved between the video sequences.

By opening the file multiple times the application can interpret one session as access to the audio stream and another session as access to the video stream. The session accessing the audio stream will be positioned at the start of the first audio chunk, read the audio data contained in the chunk, then position at the start of the next audio chunk by seeking ahead in the file to the start of the next audio chunk. The session with the video stream will obtain the video data in a like manner. It will position at the start of the first video chunk, read all consecutive video chunks, then skip the interleaved audio data by seeking to the start of the next video sequential chunk.

Implicit Data Timing

If the media source specifies the presentation rate of the data it represents, the source need not contain presentation time or presentation duration for each discrete presentation chunk of data. The presentation time and presentation duration are implicit and can easily be derived by the application using the following formulas.

Presentation_Time = Presentation_Rate * Presentation_Unit_Number;

Presentation_Duration = 1 / Presentation_Rate;

If the network bandwidth is insufficient to deliver time dependent data to the client efficiently enough for the client to process and display the data, the data will become stale prior to display. Likewise, if the system is not sufficiently proficient to process and display data by the implicit presentation time, the data will become stale. An end user will experience different results depending on how the application deals with stale data.

Late Delivery of Data

If the network is unable to deliver data to the client prior to the implicit presentation time of the data, the application has two options available to it. The client can stop and wait for the required data to arrive. This is a condition of data starvation. Data Starvation may cause audio breakup (silences in audio) due to the audio subsystem running out of data to present. It may also result in video jerkiness due to the video leaving a previous presentation on the screen longer than the implicit presentation duration while waiting for new data to arrive.

The client can instead choose to reposition itself forward in the temporal data stream to a position where the data is again temporally relevant. This is a condition of data drop out. Amounts of data are skipped over in an attempt to maintain temporal integrity. Because of inter unit dependencies of the media streams the advances may need to be substantial to achieve data integrity. For example, many compression technologies employ a key frame/difference frame dependency. Any difference frame decoding is dependent on all frames preceding it up to and including the preceding key frame. To achieve data integrity, the application needs to reposition to one of the subsequent key frames. Since key frames may be separated by many difference frames the temporal reposition may also be substantial.

Late Processing/Presentation of Data

If the client is unable to process (decode) and render (display) the data by the implied presentation time, the presentation time of the data will exceed the system time and the data will be stale. The application will commonly react in one of three ways if this occurs. It can choose to process tne data but avoid rendering the data. On systems able to process data faster than rendering data this will allow only minimal data loss (possibly an occasional presentation unit). This solution only works sufficiently on systems that have processing resources sufficient to process all audio and video data but do not have sufficient resources to render the video data. If the client is unable to process the audio or video data, or is unable to render the audio data, the client will be forced to resolve the situation in one of the following manners.

The client can stop and wait for the required data to be processed and/or rendered. As before, this is the condition of data starvation and again may cause audio breakup (silences in audio) due to the audio subsystem running out of data to present. It may also result in video jerkiness due to the video leaving a previous presentation on the screen longer than the implicit presentation duration while waiting for new data to be processed.

As before, the client can instead choose to reposition itself forward in the temporal data stream to a position where the data is again temporally relevant. This is a condition of data drop out. Amounts of data are skipped over in an attempt to maintain temporal integrity. Because of inter unit dependencies of the media streams the advances may need to be substantial to achieve data integrity. For example, many compression technologies employ a key frame/ difference frame dependency. Any difference frame decoding is dependent on all frames preceding it up to and including the preceding key frame. To achieve data integrity, the application needs to reposition to one of the subsequent key frames. Since key frames may be separated by many difference frames the temporal repositioning may also be substantial.

Resource Availability Oscillations - Delivery (Network) Resources

The last several years have seen enterprise computing moving from centralized computing architectures that are mainframe or stand alone desktop based systems to distributed computing, where multiple servers and desktop systems share resources via local or wide area networks. Client/server architecture and peer-to-peer architecture are common examples of distributed computing model.

The network itself often becomes a shared resource among participants in the distributed computing model. When an application makes use of network bandwidth to accomplish a task such as data movement, there is less free bandwidth available for other participants of the distributed environment.

As participants make more or less use of the shared network environment, resources available to any one participant may oscillate greatly. This is of little concern for participants if their data is not time critical since the random oscillations average out over the long run.

Time critical data dependent on continuous high data rates can be adversely affected by these oscillations. If insufficient bandwidth in available on the network, delivery of the data may occur subsequent to the presentation time of the data. The data, under these circumstances, is of little use to the system.

Resource Availability Oscillations - Workstation (Client) Resources

Tasks residing on client workstations that run under multitasking operating systems or have system resources may also experience stale data due to inability to process and render all data prior to presentation time of the data. In other words the time the system needs to decompress and render a chunk of data may exceed the presentation time of the previous chunk of data. This may occur due to insufficient total resources in the workstation (CPU or video subsystem too slow) or resources are in use by other tasks (such as CPU servicing other tasks).

Time critical data dependent on continuous high data presentation rates can be adversely affected by these oscillations. If insufficient resources are available on the client workstation to process and render the data, the display of the data may occur subsequent to the presentation time associated with the data. It is possible to have data reach a client workstation prior to the presentation time association with the data, but the workstation is unable to process and render the data prior to the presentation time.

Streaming

It is possible to smooth an amount of susceptibility to resource oscillations by streaming data from the producer of the data to the interpreter of the data. As mentioned above, oscillations of system resources (both network and workstation) tend to smooth out over larger time quanta. By delivering data from the producer of the media to the interpreter substantially prior to the presentation time of the data, the system can somewhat minimize the affects of resource oscillation. By scheduling to have the data to the recipient some amount of time (say one second) prior to the presentation time associated with the data, the system can absorb a blockage of resources up to one second in duration.

It must be noted that the adversity of resource dearth is additive. For example, if one packet is scheduled for delivery to the workstation one second prior to its presentation time, and it is blocked from transfer for a half a second, the next packet, since it is sequentially delivered, has a delivery window of approximately one-half second.

Client Read Ahead Cache

To support streaming of data the client allocates local resources to store streamed data prior to request from the processing/rendering applications. The present invention allocates the local storage resources from system memory for greatest performance. However, it is possible for the architecture to use other local storage media to counter delays and oscillation of the delivery network. In allocating local storage resources there exist mapping functions from desired temporal depth of storage to physical storage requirements.

Let TSD be the Temporal Storage Depth the system desires for the read ahead cache supporting streaming. Let MBR be the Maximum Bit Rate the data can be supplied to the client workstation determined during session establishment. Let NPS be the Network Packet Size determined during session establishment. Let PSR be the Physical Storage Resources required of the client and pPSR be a pointer to PSR. PSR can be allocated from the system using the C language runtime call:

pPSR = alloc (MBR*TSD/NPS, NPS);

This provides physical memory sufficient to store the temporal read ahead cache at the maximum bit rate the system will deliver for the given session. It should be noted that if multiple files are accessed during a particular session, the client will need to recalculate PSR if the MBR of a subsequent file is greater than the file currently being accessed.

### Audio Prioritization

Human perception of audio is highly sensitive requiring smooth and continuous presentation of the audio samples at a steady rate. However, human perception is highly tolerant of smooth variation in video quality and frame rate, typically perceiving motion despite a wide variation in quality of the picture and its presentation frame rate. Empirical evidence shows that humans perceive motion if the presentation frame rate is between 15 and 30 frames/sec. Even at lower frame rates, we still perceive motion although the artifacts are more noticeable.

By prioritizing the retrieval, transmission, and presentation of audio over video within a network computing environment without loss of synchronization, a digital video management system can optimally utilize the available computing, compression, and network resources while maintaining an acceptable presentation of audio and video.

### Architecture of the Invention

The architecture defines client/server session management protocols and stream management protocols for accessing, retrieving and presenting dynamic data types such as video and audio over existing local and wide area networks. The present invention provides a powerful resource assessment and trend prediction system that can dynamically adapt data rates and delivery configurations to available computing resources and communication bandwidth while maintaining an acceptable presentation of synchronized video and audio. The invention transparently provides adaptive rate scaling to any application utilizing industry standard application programming interfaces to access information across a network from a video server.

Digital video can be stored in ordinary computer files on file servers or generated from live analog video sources and made accessible over local and wide area packet networks. Access to digital video can be on demand as in retrieving and presenting from a stored file or on schedule as in injecting into and tapping from a broadcast channel.

A video system utilizing the invention provides:

- client/server access, control, and management protocols for providing dynamic data from a video server or a video injector
- stream data transport protocols that allow stream read-ahead, prioritization of audio over video, and semantic enhancement of dynamic data
- evaluation of resources available for delivery and presentation of dynamic data on networked multitasking systems
- dynamic client/server feedback protocols allowing for adaptive computational resource and communication bandwidth management
- dynamic adjustments to delivery and presentation components based on available resources within the system

Referring to Fig. 1, these responsibilities are divided between three functional subsystems - a *Media Producer* 12, a *Resource Assessor* 22 , and a *Media Interpreter* 24. Working in conjunction these modules are able to determine and predict resource availability of the system, limit rates of data that are delivered and processed to levels the system can handle,and dynamically modify the delivery system to optimize performance based on current rates.

Each of the functions of the Media Producer 12, the Resource Assessor 22, and the Media Interpreter 24 may be implemented in hardware or software, using standard design techniques, as will be recognized by those skilled in the art. Appendices A, B, C, D, and E present a pseudocode scheme for implementation of these functions. The coding of the pseudocode process steps into computer instructions suitable to carry out the described scenario will be understandable to one having ordinary skill in the art of C programming.

Media Producer

The Media Producer 12 is a software module responsible for the dynamic production of audio/video information containing out of band semantic information. The Media Producer resides on a video server (data source) 10. It is responsible for efficient access, parsing, scaling, and semantic enrichment of audio/video information. The Media Producer 12 performs the translation between tagged raw data representation and semantically enriched dynamic computer representation of audio/video data possibly scaled to a lower video data rate based on trend information supplied from a client workstation (data consumer) 20.

Media Interpreter

The Media Interpreter 24 is a software module responsible for delivering appropriate media data to applications adhering to supported application programming interfaces such as the Media Control Interface from Microsoft Corporation of Redmond, Washington. It is also responsible for responding to data requests from the application according to the semantically enhanced information produced by the Media Producer 12. During system operation the Media Interpreter 24 dynamically adapts its configuration and operation in response to information provided by a Resource Assessor 22 (described below). Due to the substantial oscillations found in today's complex computing environments (multitasking operating systems, shared local and wide area networks, distributed computing solutions, etc.) and the demands placed on these systems by high data rate, time dependent data delivery and display, a system must continually adjust to provide the most efficient high level of performance with available resources.

Resource Assessor

The Resource Assessor 22 is a software module responsible for dynamically analyzing resource availability trends of the system and providing this information to the Media Interpreter 24 and the Media Producer 12. The Resource Assessor 22 uses techniques 26 and 28 to evaluate the bandwidth available on the communications medium 30 (local or wide area network) and the client workstation (data consumer) 20. Using the information obtained regarding resource availability (or lack thereof) the Resource Assessor 22 determines resource availability trends (their direction and magnitude) informs the Media Interpreter 24 and Media Producer 12 of changes 32 needed to maintain acceptable system performance.

The Media Producer 12 and the Media Interpreter 24 provide highly efficient generation and delivery of time dependent, high bandwidth data 34 and 36 during playback and display of dynamic data types. The Resource Assessor 22 can asynchronously sense 28 system load and affect the data flow, but doesn't participate in the data flow itself. Furthermore, the data flow is handled with minimal buffer copies between the disk or network subsystem and the dynamic data type handling hardware.

This architecture is highly portable to most modern operating systems supporting preemptive or non-preemptive multitasking and prioritized or "round robin" scheduling. The architecture also allows selective off-loading of the Media Producer 12 and/or the Media Interpreter 24 to a dedicated coprocessor for efficient data management. The highly decentralized architecture adapts easily to all existing LAN and WAN communications mediums 30.

Behavior Model

The preferred embodiment of the present invention currently consists of the Media Producer 12, the Media Interpreter 24 and Resource Assessor 22 modules.

The Media Producer 12 resides on the remote video server 10 and is responsible for managing the stored video files, enhancing the dynamic data with additional semantic information, adjusting data rates by smoothly dropping video data from the stream according to trends detected by the Resource Assessor 22 module, and delivering the dynamic data 34 and 36 across the network to the Media Interpreter 12.

The Media Interpreter 24 resides on the client (data consumer) 20 and provides resource trend information 32 to the Media Producer 12 using client/server session management protocols and resource availability information provided by the Resource Assessor 22 module.

The Resource Assessor 22 module resides on the client (data consumer) 20. It uses direct and indirect resource detection techniques 26 and 28 to derive the magnitude and direction of resource availability trends. Values representing the trends are delivered to the Media Producer 12 and supplied to the Media Interpreter 24 upon request.

Client/Server Session Management Protocols

The video server advertises its services through a standard network protocol. In a common network software environment such as the Netware® environment of Novell Inc. of Provo, Utah, this protocol is the Service Advertisement Protocols (SAP). Each video server is responsible for a name space of the *Media* Sources that it advertises.

When an application opens a file (for example, an Audio Video Interleaved (AVI) file in a Microsoft Video for Windows environment from Microsoft Corporation of Redmond, Washington) by name to access its contents, the video client software spawns a Media Interpreter for intelligently accessing the data contained in the file and delivering the data to the presentation application. The Media Interpreter opens one or more sessions with the Media Producer based on the name of the file the application program wishes to access. The Media Interpreter also spawns an instance of the Resource Assessor which starts a continual evaluation of system resources available for delivery and presentation of dynamic data.

During the establishment of the session(s) the Media Producer and Media Interpreter exchange information allowing the optimization of packet size, the state of the client application, maximum data rate the client will accept, and starting value to be used for the adaptive rate scaling for the session.

The Media Interpreter also allocates an amount of memory sufficient to buffer a finite temporal amount of dynamic data which is supplied the MCI compliant application. The Media Interpreter creates a session with the Media Producer and initiates a media read-ahead operation where the Media Producer starts pushing data from the server to the client.

Scaling of Data Rate

Frequently motion video data encoding schemes utilize a key frame/difference frame algorithm. A key frame contains all data, usually in compressed form, required to render the given frame on the display device. A difference frame contains, in compressed form, all information needed to render a frame with respect to a previous frame. In other words, the key frame has complete data and is self sufficient. A difference frame contains only the changes between a reference frame and itself. A difference frame is dependent on all preceding frames back to and including the previous key frame.

If motion video uses an encoding scheme other than key frame/difference frame, then each frame is, by implication, self sufficient and therefore a key frame.

The present invention semantically enhances video data streams to allow null video frames to pass through delivery, processing and rendering phases of playback thereby reducing the effective data rate of the media stream. By proactively reducing the data rate based on resource trends, as determined by the Resource Assessor, the system is able to smoothly degrade video data rates to stay within limits of system resources.

When parsing the source containing the media stream(s) (the current implementation uses Audio Video Interleaved file format) the Media Producer is able to identify key frames and difference frames in the video stream. Based on resource trends reported by the client workstation (direction and magnitude) the Media Producer varies the amount of video data delivered to the client. At best case, the Media Producer will remove no data from the video stream and it will play at the rate it was originally captured. At worst case the Media Producer will remove all video data and only audio information will be delivered to the client workstation.

When removing video data, by substituting null data chunks into the AVI file format for example, the Media Producer must work within constraints of key frame/difference frame encoding. The Media Producer starts at the tail end of a sequence of difference frames and works backwards through the sequence substituting null chunks for the video data until the appropriate reduction in effective data rate is achieved. For low scale rates the Media Producer may only need to remove the last difference frame from a sequence to attain the desired data rate. Heavier scaling may require several difference frames to be removed from the tail of a sequence of difference frames. Severe scaling may require removal of an entire sequence of difference frames and the preceding key frame to obtain the required reduction in data rate.

AVI File Format

The present invention has been implemented to operate on data consistent with the Audio Video Interleaved (AVI) file format. An AVI file consists of header information describing variable aspects of the data of the file (such as interleaving factor, types of streams contained, etc.), possibly an index into the file for optimization of positioning, and streams of data organized into chunks.

The chunk is the basic unit of organization within the file. Each chunk contains a tag identifying the type of stream the data in the chunk pertains to, the size of the chunk, and the actual data for the chunk.

Scatter/Gather

The Novell® NetWare® network operating system, referred to above, on which the preferred embodiment of the present invention is implemented, employs a capability known as scatter/gather. When moving data onto the network, for delivery to another node, the sending task can pass to the network interface a list of memory addresses and length of data at each address. The network interface layer then gathers the information residing at the addresses and packages the data into a packet for transport to the receiving node.

When receiving data from a network packet, the receiving node can pass to the network interface layer a list of addresses and length of available memory at each address. The network interface will sequentially scatter the data contained in the packet delivered by the sender to the available memory at the addresses. The network interface layer will first fill the memory at the first address, then the memory at the second address, and so on until the entire packet has been delivered or there is no more memory available according to the scatter list.

The Media Producer utilizes the gather functionality of NetWare to substitute out of band null video information for video chunks that it has been determined need to be dropped to attain the required bit rate. By referencing the null chunks the Media Producer avoids the need to modify the actual source allowing other sessions to utilize the same source with potentially different data rates.

When porting to network operating systems that do not support scatter/gather capabilities, the present invention can assume these responsibilities.

## Null Chunk Insertion

As mentioned above, the AVI file format consists of multiple chunks of data. Each chunk has a tag identifying how the unit of data is to be interpreted (e.g. video data or audio data). The Media Producer reduces the data rate delivered to the Media Producer by replacing the large amount of video data with a very small amount of semantic information representing null data to the presentation system.

For a video chunk that is to be dropped the Media Producer modifies the chunk size to be zero. This effectively creates a video chunk of no size. This reduces the effective bit rate by the size of the video chunk removed. This functionality is illustrated by the pseudocode in Appendix A.

To inform the Media Interpreter that an amount of information has been removed from the data stream, the Media Producer uses "junk chunks". The current version of the invention has been implemented to process AVI files and deliver them to MCI compliant applications. The AVI file format supports a data chunk type known as "junk chunk". The junk chunk is often used for padding of storage media to optimize alignment. Any application which is a consumer of AVI format data must understand junk chunks and knows they are not to be interpreted.

The Media Producer makes use of junk chunks to inform the Media Interpreter what data has been removed from the data stream. This allows the Media Interpreter when requested by an application to position at or access data that was dropped by the Media Producer to generate data for the application in a meaningful way.

## Resource Assessment

The present invention differs from existing solutions in several ways.

1. The invention is proactive in assessment of available resources. Existing solutions only detect when data has become stale. At best, they then attempt to resolve the situation by discarding or skipping (potentially) large sequences of data until temporal integrity returns. This is done at random intervals due to the chaotic oscillations of system resources. The invention is proactive in assessing what resources will be available for delivery, processing and rendering of data. It prohibits the delivery of data the system could not handle prior to the implied presentation time. This provides a much smoother degeneration of data rate.

2. The invention continually assesses bandwidth available for delivery of data across the network. Through knowledge of target presentation rate and deriving network delivery rate the invention is able to derive resource fluctuation trends for the shared network resource and act accordingly.

3. The invention continually assesses processing resources available to the system. Through knowledge of target presentation rate and deriving system processing load, the invention is able to derive resource fluctuation trends for the shared processing resource and act accordingly.

4. Using derived values representing direction and magnitude of resource trends, the invention is able to semantically modify the video data stream with out of band information to reduce the video data rate in a smooth manner.

## Evaluation of Network Delivery

Knowing the expected temporal data rate (how many presentation units of a given stream per unit time the system should be processing) the Resource Assessor module is able to determine if the system is outpacing or falling behind the rate data is delivered across the network.

The read ahead cache the Media Interpreter maintains on the client workstation obtains information from the network layer and delivers the data at some later time to the presentation application. The Resource Assessor examines the number of presentation units that enter the cache from the network and the number of presentation units that leave the cache to the application at the other end. This allows the Resource Assessor to evaluate whether data is being supplied to the client faster or slower than the application is consuming the data.

Since the network cannot deliver data to the client workstation when the cache is full, properly calculating the network resources available must also account for fullness of the read ahead cache. This is done by normalizing the number of units in the cache against the number of units we would optimally like to have in the cache.

The invention as currently implemented derives a transport metric (TM) to represent the resources available on the shared network. The transport metric is derived by normalizing the current temporal depth of the read ahead buffer against the desired temporal depth of the buffer.

TransportMetric - CurrentTemporalDepth/TargetTemporalDepth * 100;

The transport metric is used as input to a mapping function to obtain a relative scale value which can be returned to the server. The value returned is an eight bit signed number which is in the range of -128 to +127. The magnitude of the number represents how many 128ths of the current data rate to adjust the flow. The sign of the scale factor represents the direction of change. A negative number means less data (higher scaling) and a positive number means send more data (less scaling). The table below illustrates the mapping from a transport metric to a scale factor.

| TransportMetric | ScaleFactor |
| --- | --- |
| 0 | -35 |
| 25 | -28 |
| 50 | -20 |
| 60 | -10 |
| 70 | -6 |
| 80 | -4 |
| 90 | -2 |
| 110 | 0 |
| 120 | 6 |
| 130 | 10 |
| 140 | 15 |
| 150 | 18 |
| MAXINT | 24 |

For example: if the read ahead cache buffer has a temporal depth of more than 90% of the target and less than 110% of the target the system is at steady state. No scaling adjustments are needed due to network resources and zero is returned as the network scaling value. If the temporal depth of the read ahead cache is between 60% and 70% of the desired depth a scaling factor of -6 is returned. The -6 tells the Media Producer to decrease the data rate by 6/128 of the current data rate.

If NR is the new rate, CR is the current rate, and SF is the scale factor returned from the table the Media Producer will calculate the new data rate using the formula:

$$NR = CR * (1 + SF /128);$$

Because different production and transport mechanisms have characteristics (such as different propagation delays) the determination of the adjustment to data rate scaling due to network resources is abstracted into a lookup table. This allows the system to adjust to environments having different characteristics by modifying the table rather than through changes to code. Other methods may be used to provide equivalent functionality, such as using a function to derive the scaling values. The scaling value need not represent a percentage change of the of the current data rate but rather may actually represent an absolute data rate directly.

A table is used by the current implementation of the invention to obtain a scaling value based on network resources. The table allows mapping of the normalized temporal units in the pipe to a network scale parameter that represents the resource trend change vector. Using the table allows the Media Assessor to derive a network scale parameter (resource trend - direction and magnitude) based on the change in the number of normalized temporal units which reside in the cache compared the number of normalized temporal units that were residing in the cache during the last time quantum. This functionality is illustrated by the pseudocode listed in Appendix B.

Evaluation of Processing and Rendering Resources

Evaluation of process and rendering resource trends is performed on a continual basis by the Resource Assessor. The objective in a single or multitasking system is to utilize as many processing and rendering resources as possible without adversely degrading overall system performance. In other words, there is a ceiling of resource availability (computational cycles, data movement bandwidth, image display, etc.) which, if exceeded, will degrade overall performance of the system. The present invention is able to detect and quantify the resource availability ceiling within the Microsoft Windows operating environment which can be used to drive the adaptive rate scaling process. The detection and quantification of the resource ceiling is readily portable to other operating systems.

Microsoft Windows is a message based operating system. Within the message passing protocol are messages of differing priorities such as timer messages or paint messages. These messages are only delivered to applications when no other messages exist in the application's message queue. Receiving a timer message implies:

- The task has no outstanding messages from other tasks or the system itself. It therefore has no events to process.
- The task is not busy processing a previous event.
- No other task is running.

When the task receives a timer message it can assume there is nothing of significance occurring in the system. In other words the task is near idle and all other tasks have released system resources for other tasks to run.

The present invention detects client workstation resource availability based upon the frequency deviation of receiving low priority messages. For this implementation, the invention uses the deviation of the frequency that a timer message is received from the frequency of timer events the task requested from the system. Each time a timer message is received an event counter is incremented. At discrete intervals the Resource Assessor module will examine the frequency of timer events and compare them against the expected frequency.

Since the timer message is of a lower priority than all other events (excepting paint messages) in the Microsoft Windows environment, the arrival of timer messages to a given task at a requested frequency will occur at a lower frequency when the system is heavily loaded. Conversely, if the system is lightly loaded, the receipt of timer messages will be of the frequency the task requested. By tracking the deviation of timer message receipt from the requested frequency and examining the deviation the adaptive rate scaling process is able to quantify the system load.

The invention as currently implemented derives a client metric (CM) to represent the resources available on the shared network. The client metric is derived by normalizing the frequency of timer events against the requested frequency of timer events.

ClientMetric = ActualFrequency RequestedFrequency * 100;

The client metric is used as an input to a mapping function to obtain a relative scale value which can be returned to the server. The value returned is an eight bit signed number which is in the range of -128 to +127. The magnitude of the number is how many 128ths of the current data rate to adjust the flow. The sign of the scale factor represents the direction of change. A negative number means send less data (higher scaling) and a positive number means send more data (less scaling). The table below illustrates the mapping from client metric to scale factor.

| ClientMetric | ScaleFactor |
|---|---|
| 0 | -24 |
| 50 | -18 |
| 100 | -12 |
| 275 | -6 |

(continued)

| ClientMetric | ScaleFactor |
|---|---|
| 325 | -3 |
| 475 | 0 |
| 525 | 3 |
| 600 | 6 |
| 700 | 12 |
| 900 | 18 |
| MAXINT | 24 |

For example, if the number of timer messages received is more than 325 and less than 475 the client system is at the desired load level and is therefore at steady state. No scaling adjustments are needed due to client resources and 0 is returned as the client scaling factor. If the number of timer events is between 100 and 275 a scaling factor of -6 is returned. The -6 tells the Media Producer to decrease the data rate by 6/128 of the current data rate.

If NR is the new rate, CR is the current rate, and SF is the scale factor returned from the table the Media Producer will calculate the new data rate using the formula:

$$NR = CR * (1 + SF /128);$$

By using the frequency of timer events as a lookup value into a mapping table the Resource Assessor can derive a client scale vector the adaptive rate scaling process can use to modify data rate the Media Producer delivers to the client workstation. Other methods may be used to provide equivalent functionality, such as using a function to derive the scaling values. The scaling value need not represent a percentage change of the of the current data rate but rather may actually represent an absolute data rate directly.

A table is used by the current implementation of the invention to obtain a scaling value based on client resources. The table allows mapping of the timer message count to a client scale parameter that represents the resource trend change vector. Using the table allows the Media Assessor to derive a client scale parameter (resource trend - direction and magnitude) based on the change in the number of timer messages received for period. This functionality is illustrated by the pseudocode listing in Appendix C.

Modifying Cache

As the Media Producer increases or decreases the amount of scaling the Media Interpreter will potentially have more or less temporal units in a read ahead cache of a given physical size. When the cache is first allocated its size is sufficient to hold a number of temporal units at the maximum data rate that will be supplied.

During operation of the system the adaptive rate scaling process may instruct the Media Producer to proactively scale back the data rate. The Media Producer does this by substituting null frames for existing video frames. Since the data needed to represent a null frame is significantly less than the video data it replaces (potentially several orders of magnitude), the read ahead cache on the client workstation will represent a temporal depth significantly deeper than desired.

A growth of temporal depth in the cache adversely affects performance of the adaptive rate scaling process. As when the temporal depth of the cache increases the propagation delay of data rate changes also increases. Since data is not discarded once it has been generated by the Media Producer, all data within the streaming cache needs to be consumed before data produced by the Media Producer, at a modified rate, can stabilize the system.

It is possible for the temporal depth to grow sufficiently in size that it creates oscillations in the adaptive rate scaling requests of a magnitude to perturb system performance to a greater extent than the oscillations a system will commonly experience due to fluctuations of system resources. Any adaptive rate scaling policy employing read ahead streaming of time based media must dynamically adjust the physical resources allocated for the read ahead cache system.

The present invention dynamically modifies the physical resources allocated to the cache to maintain a temporal depth within a maximum positive deviation and maximum negative deviation from the target temporal depth. This functionality is illustrated by the pseudocode listing in Appendix D.

By maintaining the read ahead streaming cache as a queue consisting of multiple series of buffers equal in size to the maximum packet size used by the network the following objectives are achieved.

• Copying of data is minimized. The caching mechanism makes a free buffer available to the network interface (input to the cache) which is of sufficient size to hold a network data packet. When the data packet is copied into the memory space of the Media Interpreter it is copied directly into the queue. Since a copy must occur to move the data into memory from the transport we have inserted the data into the appropriate position of the queue without invoking an additional copy.

- The data queue is segmented allowing the Resource Assessor to lessen the amount of physical resources available by removing buffers from the read ahead cache and parking them in an idle queue. As the adaptive rate scaling process used by the invention reduces media data rate it also reduces the physical resources available to the read ahead streaming cache so the temporal depth ot the cache stays sufficiently close to the desired depth. As resources become available for delivery and processing of media streams the Resource Assessor can move buffers from the parked queue to the cache queue.

Resource Balancing

The process of delivering, processing and rendering time critical data can only occur at a rate limited by the slowest link in the process. In the case of the adaptive rate scaling process, the data rate modification vector delivered to the Media Producer from the client workstation is the lesser of the value derived for network resource limitations and the value derived for client processing resource limitations. This functionality is illustrated by the pseudocode listed in Appendix E.

With reference to both the claims and the description of the preferred embodiment, a Data Source 10 refers to a computer system providing the Media Producer functionality. The expression "data consumer" refers to a computer system providing the Resource Assessor and Media Interpreter functionality.

A-1

## Appendix A

```
Drop_Chunk (char pRiffChunk)
{
        intVidChunkSize;
        int JunkChunkSize;
        SEMANTIC_INFO SemanticJunkChunk
        //obtain the size of the current video data then change to zero
        VidChunkSize = Get_Riff-Chunk_Size(pRiffChunk);
        Set_Riff_Chunk_Size(pRiffChunk, 0);
        // now add a junk chunk to represent the semantic information
        // for the Media Interpreter
        JunkChunkSize = VidChunkSize-sizeof(CHUNK_HEADER);
        Create_Semantic_Junk_Chunk (JunkChunkSize);
        // update the gather list to reduce the bit rate by removing
        // dropped data from data stream
        Update_Gather_List(pRiffChunk);
}
```

B-1

## Appendix B

```
struct tag_RESOURCE_MAP
{
        int NormalizedValue;
        int ScaleVector;
}RESOURCE_MAP


#define MAX_NET_MAP_ENTRIES  i    //where i is some integer greater than 0


RESOURCE_MAP NetResMap[ ] = {{n_0,v_0}, {n_1,v_1}, {n_2,v_2},...{n_{i-1},v_{i-1}}}
                                    // the values could also be derived at run
time


int Calculate_Network_Scale ()
{
        int NumEmptyPkts;
        int NumFullPkts;
        int NumTotalPkts;
        int NumUnitsIntoCache;
        int NumUnitsOutofCache;
        int NumUnitsCached;
        int NumDesiredUnits;
        int NrmlUnits;
        int index;
        int NetScaleVector;


        // Initialize variables
        NumDesiredUnits = Get_Temporal_Depth(...);
```

## B-2

```
NumUnitsIntoCache - Get_Units_Into_Cache(...);

NumUnitsOutofCache - Get_Units_Outof_Cache(...);

NumUnitsCached - NumUnitsIntoCache - NumUnitsOutofCache;

NumEmptyPkts - Get_Num_Empty_Packets(...)'

NumTotalPkts - Get_Num_Total_Packets(...);

NumFullPkts - NumTotalPkts - NumEmptyPkts;


// Derive the normalized value of temporal change
NrmlUnits - NumUnitsCached * 100 / NumDesiredUnits;


// Use the table to map the normalized value to the scale vector
NetScaleVector - NetResMap[0].ScaleVector;
for (index - 0; index < MAX_NET_MAP_ENTRIES; index+ +)
{
        if (NetResMap[index].NormalizedValue > NrmlUnits)
                NetScaleVector - NetResMap[index].ScaleVector;
}
return (NetScaleVector);
}
```

C-1

## Appendix C

```
struct tag_RESOURCE_MAP
{
        int NormalizedValue;
        int ScaleVector;
}RESOURCE_MAP


#define MAX_NET_MAP_ENTRIES  i   //where i is some integer greater than 0


RESOURCE_MAP Client ResMap [] = {{n₀,v₀}, {n₁,v₁}, {n₂,v₂},...{nᵢ₋₁,vᵢ₋₁}};
                                // these values could also be derived at run time
int NumTimerEvents;             // the number of timer events we receive


int Calculate_Client_Scale ()
{
        int     timeIntStart;       // time this discrete scale interval started
        int     timeIntLen;         // length of this discrete scale interval
        int     TimerFrequency;     //the frequency of timer events we received
        int     ClientScaleVector;
        int     index;


        timeIntLen = Get_Time(...) - timeIntStart;


        //Determine the client scale vector based on frequency of timer events
        TimerFrequency = NumTimerEvents / timeIntLen;
        ClientScaleVector = ClientResMap[0].ScaleVector;


        for (index = 0; index < MAX_CLIENT_MAP_ENTRIES; index+ +)
```

## C-2

```
{

        if (ClientResMap [index].NormalizedValue > TimerFrequency)
                ClientScaleVector = ClientResMap[index].ScaleVector;
}
NumTimerEvents = 0;
return (ClientScaleVector);
}
```

D-1

## Appendix D

```
int NumTotPkts;                // total packets allocated
int NumPktsInUse;              // num pkts to obtain actual temporal depth
int TargetNumPktsParked;       // how many packets we want parked.
int NumPktsParked;             //how many packets currently parked


Cache_Ajdustment (int DesiredDepth)
{
        int ActualDepth;       // the actual temporal depth of cache
        int NrmlUnits;         // units normalized against desired temporal depth


        // we assume we are OK to start
        TargetNumPktsParked = NumPktsParked;
        // calculate the current depth of the read ahead streaming cache
        ActualDepth = Get_Units_Into_Cache(...) - Get_Units_Outof_Cache(...);


        // normalize the temporal depth against the desired temporal depth
        NrmlUnits = Actual Depth  * 100 / DesiredDepth;


        // calculate a new target for number of buffers (packets) to park if needed
        if ((NrmlUnits > DesiredDepth + UPDEVIATION) ||
            ((NrmlUnits < DesiredDepth - DWNDEVIATION) && PipeIsFull(...)))
        {
                //need to adjust the number of packets to park
                TargetNumPktsParked = NumTotPkts -
                                ((NumPktsInUse * 100) / NrmlUnits);
        }
}
```

E-1

## Appendix E

```
DoScalingFeedback ()
{
        int NetScaleVector;
        int ClientScaleVector;
        int ScaleVector;

        // find the resources available for delivery and processing of data
        NetScaleVector = Calculate_Network_Scale();
        ClientScaleVector = Calculate_Client_Scale();
        if (NetScaleVector < ClientScaleVector)
                ScaleVector = NetScaleVector;
        else
                ScaleVector = ClientScaleVector;

        // check if cache needs adjusting based on current data rate
        Cache_Adjustment (DESIRED_TEMPORAL_DEPTH);

        // send the scale vector to the Media Producer
        SendScaleVector(ScaleVector);
}
```

**Claims**

1. A data delivery system, comprising:

   a data communications medium (30)
   a data source (10) connected to said data communications medium to deliver data to said data communications medium;
   a data consumer (20) connected to said data communications medium, wherein said data consumer receives data delivered by said data source through said data communications medium, **characterized in that**
   said data consumer (20) is configured to calculate a dynamic scaling parameter representing the loading of the system and based on at least one preselected variable characteristic relating to the loading of the system, and to communicate said dynamic scaling parameter to said data source (10),

and in that said data source (10) is configured to selectively discard a portion of the data delivered thereby through said data communications medium (30) to the data consumer (20) according to said dynamic scaling parameter,

whereby the volume of data delivered through said data communications medium may be varied according to the loading of the system.

2. The data delivery system of claim 1, wherein said data consumer (20) is configured to calculate said dynamic scaling parameter according to a rate of data delivery through said data communications medium (30).

3. The data delivery system of claim 1, wherein said data consumer (20) is configured to calculate said dynamic scaling parameter according to a capacity characteristic of said data consumer.

4. The data delivery system of claim 1, wherein said data consumer (20) is configured to calculate said dynamic scaling parameter according to a rate of data delivery through said data communications medium (30), and an availability of resources of said data consumer.

5. The data delivery system of claim 1, wherein said dynamic scaling parameter is based upon the frequency of timer messages received by said data consumer.

6. The data delivery system of any of claims 1 to 5, wherein said data delivered by said data source comprises first and second types of data, wherein the first data type is delivered at a fixed volume and the second data type is delivered at a variable volume, and the data consumer is configured to determine the said dynamic scaling parameter according to the state of synchronization between the two types of data, whereby said first and second types of data are synchronized by selectively removing portions of said second data type.

7. The data delivery system of any of claims 1 to 5, wherein said data delivered by said data source (10) comprises synchronized video data (36) and audio data (34).

8. The data delivery system of claim 7, wherein said data source (10) is configured to discard only video data according to said dynamic scaling parameter.

9. The data delivery system of claim 8, wherein said video data (36) is compressed in a key frame/difference frame format, and wherein said data source is configured to discard only difference frames from said video data.

10. The data delivery system of claim 8, wherein said video data (36) is compressed in a key frame/difference frame format, and wherein said data source is configured to discard only trailing difference frames in a series of difference frames based on a particular key frame.

11. The data delivery system of claim 8, wherein said video data (36) is compressed in a key frame/difference frame format, and wherein said data source is configured to discard a key frame and all associated difference frames.

12. The data delivery system of any of claims 8 to 11, wherein said data source (10) is configured to discard said video data by substituting null frames for said discarded video data.

13. The data delivery system of claim 1, wherein said data consumer (10) includes a read ahead cache configured to temporarily store data received from said data source through said data communications medium.

14. The data delivery system of claim 13, wherein said scaling parameter is determined according to an amount of data stored in said read ahead cache.

15. The data delivery system of claim 13, wherein the capacity of said cache varies according to said scaling parameter.

**Patentansprüche**

1. Datenliefersystem mit:

einem Datenkommunikationsmedium (30);
einer an das Datenkommunikationsmedium angeschlossene Datenquelle (10) zum Liefern von Daten an das Datenkommunikationsmedium;
einer Datenabnehmereinrichtung (20), die an das Datenkommunikationsmedium angeschlossen ist, wobei die Datenabnehmereinrichtung von der Datenquelle gelieferte Daten durch das Datenkommunikationsmedium empfängt,

**dadurch gekennzeichnet, daß**

die Datenabnehmereinrichtung (20) so ausgebildet ist, daß sie einen dynamischen Skalierparameter berechnet, welcher die Belastung des Systems repräsentiert, auf der Grundlage zumindest einer vorbestimmten variablen Eigenschaft in Bezug auf die Belastung des Systems, und den dynamischen Skalierparameter an die Datenquelle (10) übermittelt,

und daß die Datenquelle (10) so ausgebildet ist, daß sie selektiv einen Anteil der Daten wegfallen läßt, die hierdurch über das Datenkommunikationsmedium (30) an die Datenabnehmereinrichtung (20) entsprechend dem dynamischen Skalierparameter geliefert werden,

wodurch der Umfang der Daten, die durch das Datenkommunikationsmedium geliefert werden, entsprechend der Belastung des Systems variiert werden kann.

2. Datenliefersystem nach Anspruch 1, bei welchem die Datenabnehmereinrichtung (20) so ausgebildet ist, daß sie den dynamischen Skalierparameter entsprechend einer Datenlieferrate durch das Datenkommunikationsmedium (30) berechnet.

3. Datenliefersystem nach Anspruch 1, bei welchem die Datenabnehmereinrichtung (20) so ausgebildet ist, daß sie den dynamischen Skalierparameter entsprechend einer Kapazitätseigenschaft der Datenabnehmereinrichtung berechnet.

4. Datenliefersystem nach Anspruch 1, bei welchem die Datenabnehmereinrichtung (20) so ausgebildet ist, daß sie den dynamischen Skalierparameter entsprechend einer Datenlieferrate durch das Datenkommunikationsmedium (30) berechnet, und entsprechend der Verfügbarkeit von Ressourcen der Datenabnehmereinrichtung.

5. Datenliefersystem nach Anspruch 1, bei welchem der dynamische Skalierparameter auf der Häufigkeit von Zeitgebernachrichten beruht, die von der Datenabnehmereinrichtung empfangen werden.

6. Datenliefersystem nach einem der Ansprüche 1 bis 5, bei welchem die von der Datenquelle gelieferten Daten eine erste und eine zweite Art von Daten umfassen, wobei die erste Datenart mit festem Umfang und die zweite Datenart mit variablem Umfang geliefert wird, und die Datenabnehmereinrichtung so ausgebildet ist, daß sie den dynamischen Skalierparameter entsprechend dem Synchronisationszustand zwischen den beiden Arten von Daten bestimmt, wodurch die erste und die zweite Art von Daten dadurch synchronisiert werden, daß selektiv Anteile der zweiten Datenart entfernt werden.

7. Datenliefersystem nach einem der Ansprüche 1 bis 5, bei welchem die von der Datenquelle (10) gelieferten Daten synchronisierte Videodaten (36) und Audiodaten (34) umfassen.

8. Datenliefersystem nach Anspruch 7, bei welchem die Datenquelle (10) so ausgebildet ist, daß sie nur Videodaten entsprechend dem dynamischen Skalierparameter wegfallen läßt.

9. Datenliefersystem nach Anspruch 8, bei welchem die Videodaten (36) in einem Vollrahmen-/Differenzrahmenformat komprimiert sind, und bei welchem die Datenquelle so ausgebildet ist, daß sie nur Differenzrahmen bei den Videodaten wegfallen läßt.

10. Datenliefersystem nach Anspruch 8, bei welchem die Videodaten (36) in einem Vollrahmen-/Differenzrahmenformat komprimiert sind, und wobei die Datenquelle so ausgebildet ist, daß sie nur hintere Differenzrahmen in einer Folge von Differenzrahmen auf der Grundlage eines bestimmten Volirahmens wegfallen läßt.

11. Datenliefersystem nach Anspruch 8, bei welchem die Videodaten (36) in einem Vollrahmen-/Differenzrahmenformat komprimiert sind, und wobei die Datenquelle so ausgebildet ist, daß sie einen Vollrahmen und alle zugehörigen Differenzrahmen wegfallen läßt.

12. Datenliefersystem nach einem der Ansprüche 8 bis 11, bei welchem die Datenquelle (10) so ausgebildet ist, daß sie die Videodaten dadurch wegfallen läßt, daß sie die weggefallenen Videodaten durch Nullrahmen ersetzt.

13. Datenliefersystem nach Anspruch 1, bei welchem die Datenabnehmereinrichtung (10) einen Vorablesecachespeicher aufweist, der so ausgebildet ist, daß er zeitweilig Daten speichert, die von der Datenquelle durch das Datenkommunikationsmedium empfangen werden.

14. Datenliefersystem nach Anspruch 13, bei welchem der Skalierparameter entsprechend der Menge an Daten bestimmt wird, die in dem Vorablesecachespeicher gespeichert sind.

15. Datenliefersystem nach Anspruch 13, bei welchem die Kapazität des Cachespeichers sich entsprechend dem Skalierparamter ändert.


**Revendications**

1. Dispositif de fourniture de données, comprenant :

   - un milieu de communication de données (30) ;
   - une source de données (10) reliée audit milieu de communication de données pour fournir des données audit milieu de communication de données ;
   - un consommateur de données (20) relié audit milieu de communication de données, lequel consommateur de données reçoit les données fournies par ladite source de données par l'intermédiaire dudit milieu de communication de données,

   caractérisé en ce que

   - ledit consommateur de données (20) est configuré pour calculer un paramètre de mise à l'échelle dynamique représentant la charge du dispositif et basé sur au moins une caractéristique variable présélectionnée relative à la charge du dispositif, et pour communiquer ledit paramètre de mise à l'échelle dynamique à ladite source de données (10) ;
   - et ladite source de données (10) est configurée pour rejeter une portion des données ainsi fournies par l'intermédiaire dudit milieu de communication de données (30) au consommateur de données (20) en fonction dudit paramètre de mise à l'échelle dynamique,

   d'où il résulte que le volume de données fournies par l'intermédiaire dudit milieu de communication de données peut être modifié en fonction de la charge du dispositif.

2. Dispositif de fourniture de données selon la revendication 1, dans lequel ledit consommateur de données (20) est configuré pour calculer ledit paramètre de mise à l'échelle dynamique en fonction d'une cadence de fourniture des données par l'intermédiaire dudit milieu de communication de données (30).

3. Dispositif de fourniture de données selon la revendication 1, dans lequel ledit consommateur de données (20) est configuré pour calculer ledit paramètre de mise à l'échelle dynamique en fonction d'une caractéristique de capacité dudit consommateur de données.

4. Dispositif de fourniture de données selon la revendication 1, dans lequel ledit consommateur de données (20) est configuré pour calculer ledit paramètre de mise à l'échelle dynamique en fonction d'une cadence de fourniture des données par l'intermédiaire dudit milieu de communication de données (30) et d'une disponibilité de ressources dudit consommateur de données.

5. Dispositif de fourniture de données selon la revendication 1, dans lequel ledit paramètre de mise à l'échelle dynamique est basé sur la fréquence des messages de rythmeur reçus par ledit consommateur de données.

6. Dispositif de fourniture de données selon l'une des revendications 1 à 5, dans lequel lesdites données fournies par ladite source de données comprennent un premier type et un deuxième type de données, dans lequel le premier type de données est fourni à un volume fixe et le deuxième type de données est fourni à un volume variable, et ledit consommateur de données est configuré pour déterminer ledit paramètre de mise à l'échelle dynamique en fonction de l'état de synchronisation entre les deux types de données, d'où il résulte que ledit premier type et ledit deuxième type de données sont synchronisés en retirant sélectivement des portions dudit deuxième type de données.

7. Dispositif de fourniture de données selon l'une des revendications 1 à 5, dans lequel lesdites données fournies par ladite source de données (10) comprennent des données vidéo (36) et des données audio (34) synchronisées.

8. Dispositif de fourniture de données selon la revendication 7, dans lequel ladite source de données (10) est configurée pour rejeter seulement des données vidéo en fonction dudit paramètre de mise à l'échelle dynamique.

9. Dispositif de fourniture de données selon la revendication 8, dans lequel lesdites données vidéo (36) sont comprimées en un format trame-clé/trame-différence, et dans lequel ladite source de données est configurée pour rejeter seulement des données vidéo les trames-différence.

10. Dispositif de fourniture de données selon la revendication 8, dans lequel lesdites données vidéo (36) sont comprimées en un format trame-clé/trame-différence, et dans lequel ladite source de données est configurée pour rejeter seulement les trames-différence sur la base d'une trame-clé particulière.

11. Dispositif de fourniture de données selon la revendication 8, dans lequel lesdites données vidéo (36) sont comprimées en un format trame-clé/trame-différence, et dans lequel ladite source de données est configurée pour-rejeter une trame-clé et toutes les trames-différence associées.

12. Dispositif de fourniture de données selon l'une des revendications 8 à 11, dans lequel ladite source de données (10) est configurée pour rejeter lesdites données vidéo en substituant des trames vides auxdites données vidéo rejetées.

13. Dispositif de fourniture de données selon la revendication 1, dans lequel ledit consommateur de données (10) contient une mémoire "cache" de lecture avancée configurée pour stocker temporairement des données reçues de ladite source de données par l'intermédiaire dudit milieu de communication de données.

14. Dispositif de fourniture de données selon la revendication 13, dans lequel ledit paramètre de mise à l'échelle est déterminé en fonction de la quantité de données stockées dans ladite mémoire cache de lecture avancée.

15. Dispositif de fourniture de données selon la revendication 13, dans lequel la capacité de ladite mémoire cache varie en fonction dudit paramètre de mise à l'échelle.

**FIG. 1**